# EUROPEAN PATENT APPLICATION

(11) **EP 1 741 618 A1**
(43) Date of publication of application: **10.01.2007**
(21) Application number: 05720310.1
(22) Date of filing: 02.03.2005
(51) Int. Cl.: B62D 25/12

(54) **OPENING/CLOSING DEVICE OF CONSTRUCTION MACHINERY**

(30) Priority: 30.04.2004 JP 2004136039
(71) Applicant: Shin Caterpillar Mitsubishi Ltd., Tokyo 158-8530 (JP)
(72) Inventor: ISHIMARU, Tetsuya, SHIN CATERPILLAR MITSUBISHI LTD, Tokyo 1588530 (JP); KUDO, Ryu, SHIN CATERPILLAR MITSUBISHI LTD., Tokyo 1588530 (JP); FUJIWARA, Makoto, SHIN CATERPILLAR MITSUBISHI LTD., Tokyo 1588530 (JP)
(74) Representative: Smith, Norman Ian
(86) International application number: PCT/JP2005/004038
(87) International publication number: WO 2005/105553

(57) **Abstract**

An opening and closing device for opening and closing a bonnet provided in the rear part of the machine body is arranged in such a manner as to ensure as large an opening portion to be formed when the bonnet is opened as possible. The opening and closing devices 18 and 19 for the bonnet 13 provided in the rear part of the machine body are adapted to have a 4-point supported link structure comprising: a bonnet side support plate 21 fixed integrally to the bonnet 13 and having first and second support members 21c and 21d provided, respectively, in the front and rear end portions thereof; a machine body side support plate 20 fixed integrally to a bracket for opening and closing device 17a that is provided in the rear frame 10 and having first and second support members 20c and 20d provided, respectively, in the front and rear end portions thereof; and first and second links 22 and 23 for movably connecting, respectively, the first support members 20c and 21c and the second support members 20d and 21d on the respective support plates 20 and 21.

## Description

### Technical Field

The present invention belongs to the technical field of an opening and closing device in a construction machine such as a hydraulic excavator or wheel loader.

### Background Art

In this kind of a construction machine, there is generally provided an opening and closing device, such as a bonnet (engine hood) on a machine body, the opening and closing device being openably and closably fixed to the machine body via a hinge device. When fixing the opening and closing device using such a hinge device, it is common to butt the end edges of the opening and closing body and the machine body against each other, and then to connect the thus butted end portions with a hinge, which poses a problem in that the hinge is exposed to the outside, resulting in a poor appearance.

In order to improve the situation, there has been proposed a technique in which a spindle, that forms a hinge device, is provided inside the opening and closing body so that the hinge device is not exposed to the outside (refer to Japanese Published Unexamined Patent Application No. 2001-163268, for example).

Meanwhile, the opening and closing body is preferably opened as widely as possible to make it easier to perform operations such as maintenance. However, the above-described conventional technique has an arrangement that the spindle provided inside the opening and closing body is shifted closer to the opening and closing body than to the end edge of the machine body, whereby when the opening and closing body is opened, the base end on the hinge side of the opening and closing body comes inside the machine body, and moves in the direction getting away from the end edge of the machine body. This results in the substantive opening area being reduced in accordance with the movement in the away direction, which poses a problem of poor workability in, for example, maintenance operations. The invention addresses and solves this problem.

### Disclosure of the Invention

The present invention has been made in consideration of the above-described circumstances and to solve the problems. The invention of Claim 1 provides an opening and closing device in a construction machine, the opening and closing device openably and closably supporting an opening and closing body, such as a bonnet, between a closed position where a machine body is closed and an opened position where the leading end side of the opening and closing body is opened by using a base end side thereof as a fulcrum, the opening and closing device having a 4-point supported link structure comprising: a first support portion provided on a base end side of the opening and closing body and a second support portion provided on a leading end side thereof; a first support portion provided on the base end side of the machine body and a second support portion provided on the leading end side thereof; a first link connected movably between the first support portion on the opening and closing body side and the first support portion on the machine body side; and a second link connected movably between the second support portion on the opening and closing body side and the second support portion on the machine body side, wherein when the opening and closing body is closed, the corresponding support portions on the opening and closing body side and the machine body side are arranged in approximately the same positions in the opening and closing direction, while the support portions on the opening and closing body side are arranged closer toward the base end than the support portions on the machine body side, the opening and closing body being adapted to be moved approximately parallel to the opening direction thereof while being kept approximately in a closed orientation to subsequently be turned to the opened position.

Then, with the arrangement above, the opening and closing body can be opened widely in accordance with the engagement state with the machine body.

The invention of Claim 2 provides the device according to Claim 1, wherein the opening and closing body is adapted to be displaced toward the leading end side in the process of changing posture into the opened position, whereby the opening and closing body can be opened in accordance with the engagement state with the machine body.

The invention of Claim 3 provides the device according to Claim 1 or 2, wherein the opening and closing body is adapted to be moved approximately parallel to the closing orientation thereof in the process of changing posture into the opened position in such a manner as to continue the displacement toward the opened position, whereby the opening and closing body can be opened in accordance with the engagement state with the machine body.

The invention of Claim 4 provides An opening and closing device in a construction machine, the opening and closing device openably and closably supporting a bonnet in a rear portion of a machine body between a closed position where the machine body is closed and an opened position where a rear end side is moved upward to be opened by using a front end side as a fulcrum, the opening and closing device having a 4-point supported link structure comprising: a bonnet side support body fixed integrally to the bonnet and having a first support portion provided on a front end side of the bonnet and a second support portion provided on a rear end side thereof; a machine body side support body fixed integrally to the machine body and having a first support portion provided on a front end side of the machine body and a second support portion provided on a rear end side thereof; a first link for movably connecting the first portions of the respective support bodies with each other; and a second link for movably connecting the second support portions with each other, wherein when the bonnet is closed, the bonnet side support body and the machine body side support body are arranged vertically in approximately the same position, and the bonnet side support body is arranged closer toward the front end than the machine body side support body is, and wherein an engaging piece formed in the front end portion of the bonnet is adapted to be engaged with an engagement receiving piece provided on the machine body in a longitudinally overlapped manner, the bonnet being adapted to be moved upward in approximately parallel while being kept approximately in a closed orientation to subsequently be opened after the engagement of the engaging piece with the engagement receiving piece is released.

Then, with the arrangement above, the bonnet can be opened with a large opening portion ensured without being disturbed by the engagement receiving piece, even in the thus claimed arrangement that the engaging piece is adapted to be engaged with the engagement receiving piece provided on the machine body when the bonnet is closed.

The invention of Claim 5 provides the device according to Claim 4, wherein the bonnet is adapted to be displaced toward the rear end in the process of changing posture into the opened position, whereby the bonnet can be positioned in the rear of the engagement receiving piece and thereby can be opened with a large opening portion ensured.

The invention of Claim 6 provides the device according to Claim 4 or 5, wherein the bonnet is adapted to be moved downward in approximately parallel in the process of changing posture to the opened position in such a manner as to continue the displacement toward the opened position so that the front end of the bonnet rides over the engagement receiving piece to be positioned to the rear of the engagement receiving piece, whereby the bonnet can be positioned in the rear of the engagement receiving piece and thereby can be opened with a large opening portion ensured, and further the operationality of the closing operation can be improved.

In accordance with the invention of Claim 1, the opening and closing body can be opened widely in accordance with the engagement state with the machine body.

In accordance with the invention of Claim 2, the opening and closing body can be opened in accordance with the engagement state with the machine body.

In accordance with the invention of Claim 3, the opening and closing body can be opened in accordance with the engagement state with the machine body.

In accordance with the invention of Claim 4, the bonnet can be released from the engagement with the machine body, and can be opened with a large opening portion ensured.

In accordance with the invention of Claim 5, the bonnet can be opened with a large opening portion ensured.

In accordance with the invention of Claim 6, the bonnet can be opened with a large opening portion ensured, and further the operationality of the closing operation can be improved.

### Brief Description of the Drawings

Fig.1 is a side elevational view of a wheel loader;
Fig.2 is a side cross-sectional view of a substantial part;
Figs.3 (A), 3 (B), and 3 (C) are, respectively, a rear elevational view, a front elevational view, and a bottom plan view of a bonnet;
Fig.4 is a rear elevational view of a substantial part;
Figs.5 (A), 5 (B), and 5 (C) are, respectively, a plan view, a side elevational view, and a bottom plan view of a right opening and closing device;
Figs.6 (A), 6 (B), and 6 (C) are, respectively, a perspective view, a side elevational view, and a front elevational view of the right opening and closing device;
Figs.7 (A), 7 (B), and 7 (C) are, respectively, a plan view, a side elevational view, and a perspective view of a left opening and closing device;
Fig.8 is a side cross-sectional view illustrating the opening and closing state of the bonnet; and
Fig.9 is a side elevational view of a substantial part, illustrating the displacement state of the bonnet and the bonnet side fixing piece when opening and closing the bonnet.

### Best Mode for Carrying Out the Invention

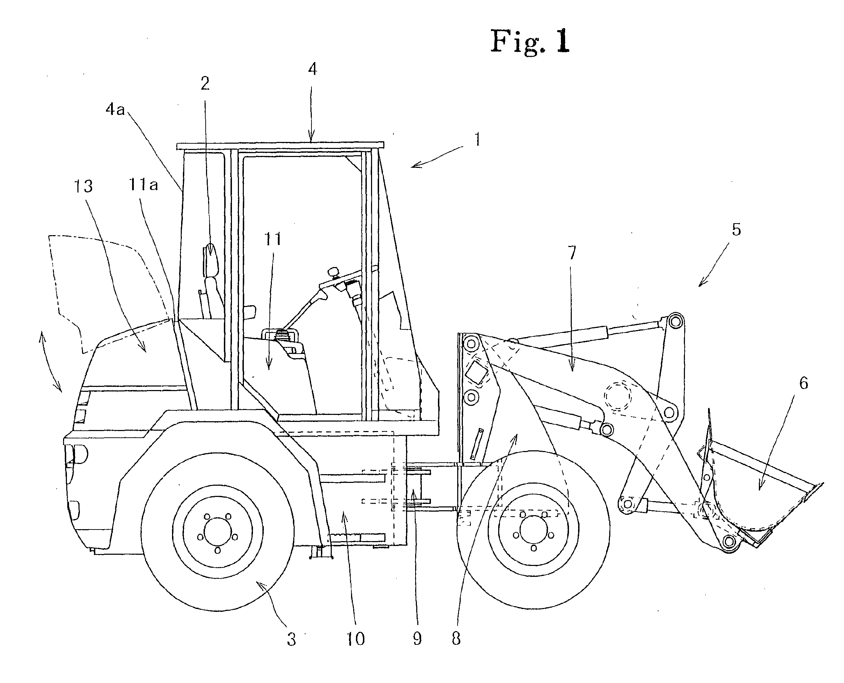

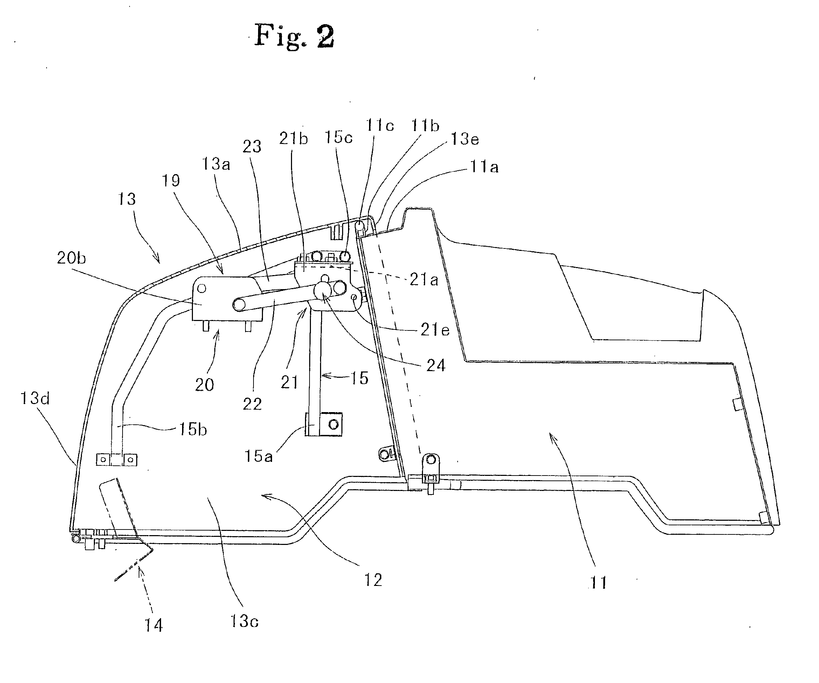

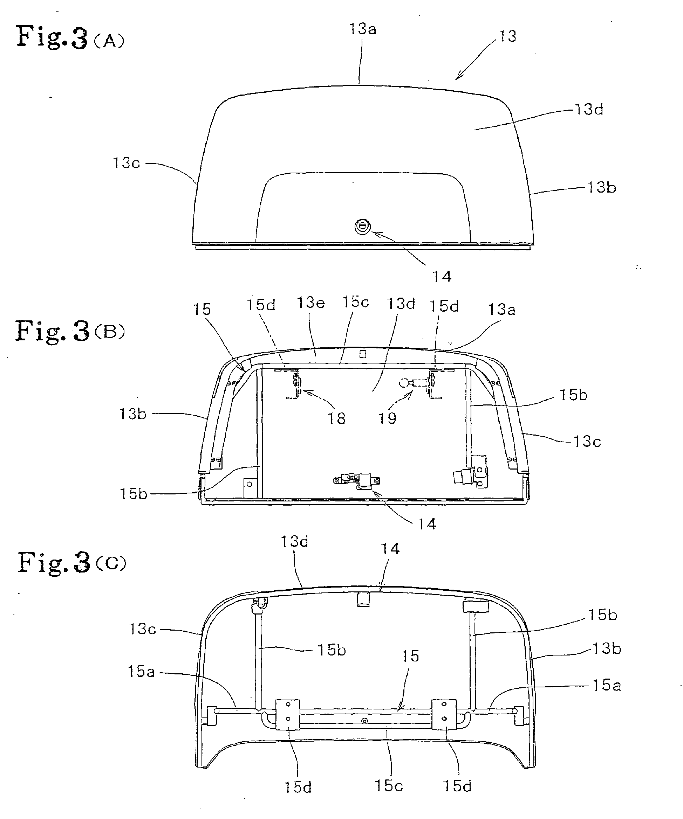

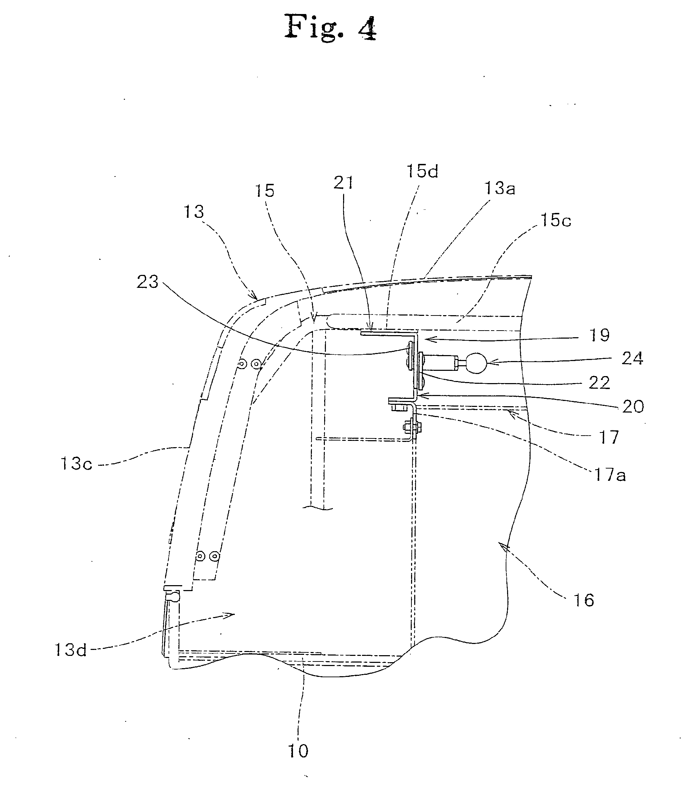

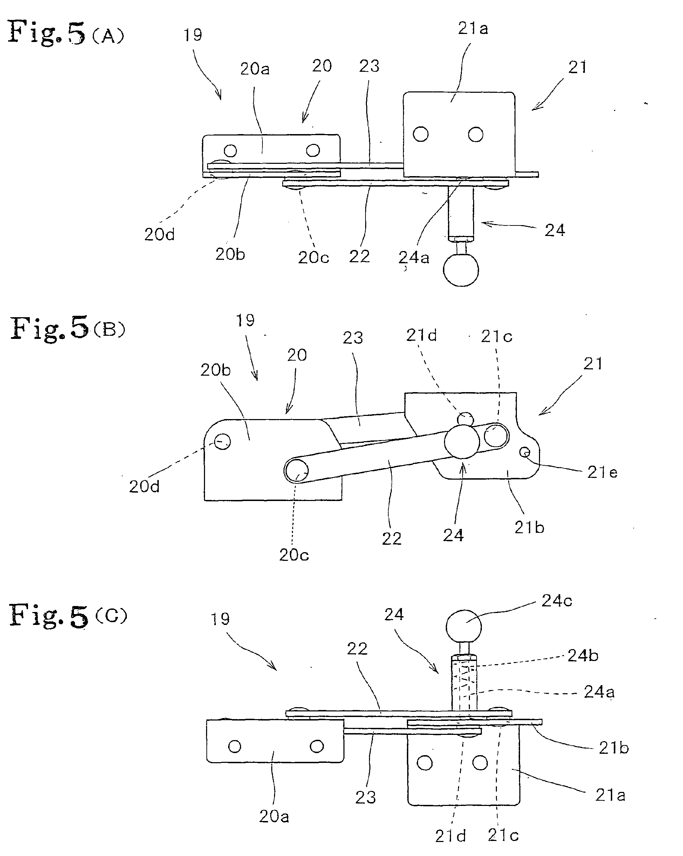

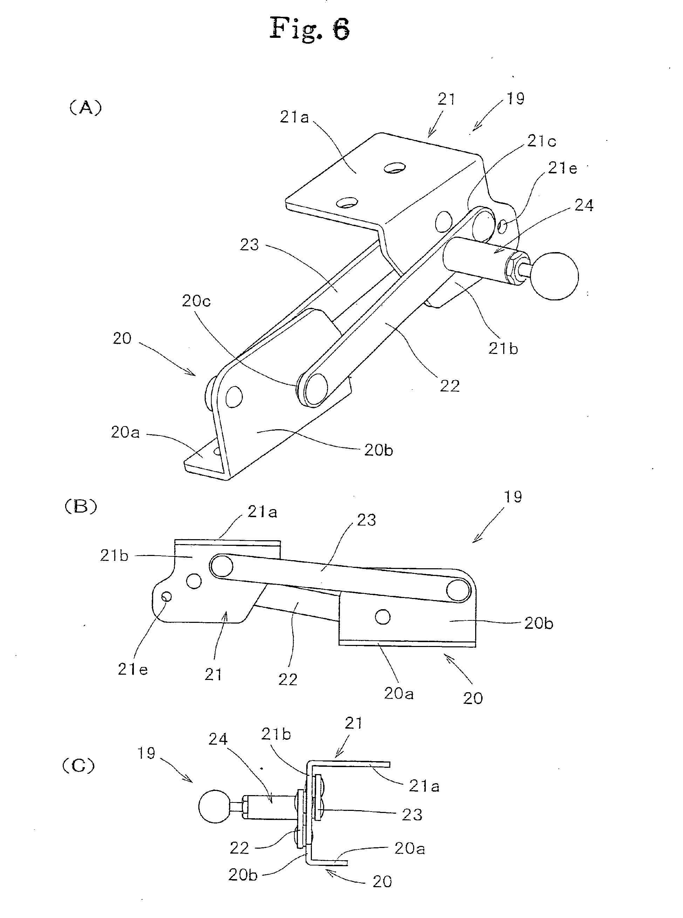

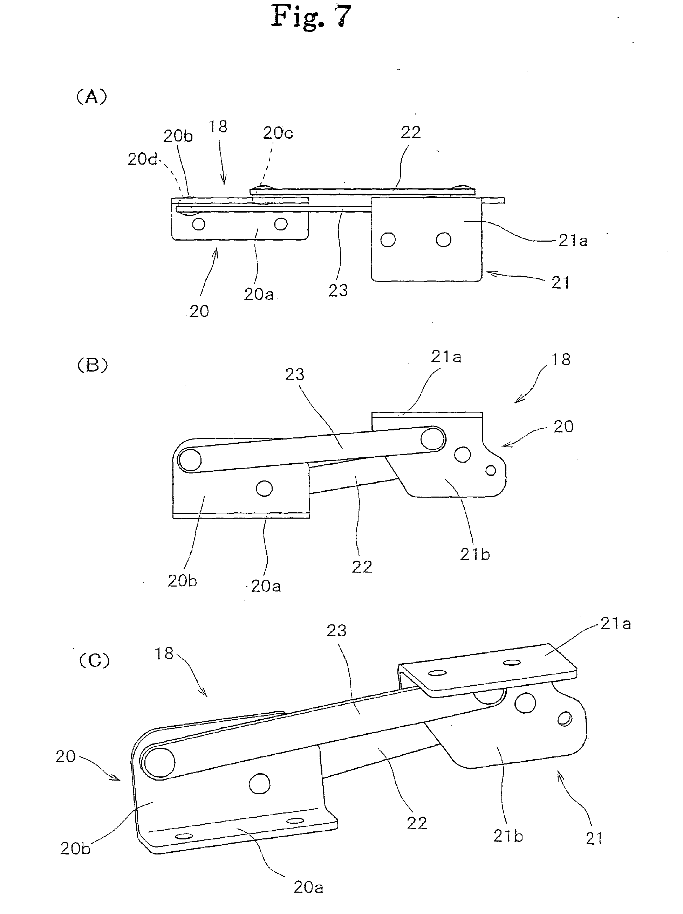

Next will be described an embodiment of the present invention with reference to Figs.1 to 9.

In the figures, the numeral 1 indicates a rear vehicle portion, that constitutes a wheel loader. The rear vehicle portion 1 is provided with various members and devices, such as an operator seat 2, rear wheels 3, and a cab 4. A front vehicle portion 5 of the wheel loader is also provided with various members and devices, such as a bucket 6, an arm 7, and a front frame 8. The front and rear vehicle portions 5, 1 are connected laterally and movably via a connecting member 9. The basic arrangement of the connecting member 9 is the same as in the past. Thus, the details will be omitted.

A rear frame 10 of the rear vehicle portion 1 is integrally provided with a pedestal case 11 for mounting the operator seat 2 in the front half thereof. The rear frame 10 and the pedestal case 11 correspond to the machine body in the present invention. At the rear end edge of the pedestal case 11 is formed a recessed groove portion 11a from both the left and right side surfaces up to the upper surface of the case. The lower end edge of the rear surface plate 4a of the cab 4 is arranged so as to be fitted into the front of the upper part of the recessed groove portion 11a in a sealing manner. A clearance is formed between the rear surface plate 4a and the rear groove side piece 11b of the recessed groove portion 11a. Here, the rear groove side piece 11b, in the upper end portion thereof is provided with a sealing member 11c made of rubber, corresponds to the engagement receiving piece for engaging a bonnet 13 to be described hereinafter, when the bonnet 13 is closed. The bonnet 13 corresponds to the opening and closing body in the present invention. The sealing member 11c is arranged in such a manner as to contact the inner surface of the bonnet 13. It is noted that the rear groove side piece will be referred to as an engagement receiving piece 11b in the following descriptions.

Further, the rear part of the rear frame 10 which is to the rear of the pedestal case 11 is formed to be an engine room 12 where various members and devices are housed. The engine room 12 is covered with the bonnet 13.

The bonnet 13 is composed integrally, of an upper piece portion 13a for covering the engine room 12 from above; left and right side piece portions 13b, 13c for covering, respectively, the left and right sides of the engine room 12; and a rear piece portion 13d for covering the rear portion of the engine 12. The front end edges of the left and right side piece portions 13b, 13c are formed so as to be shifted further forward and closer to the lower end thereof along the rear groove side piece 11b of the recessed groove portion on the pedestal case 11. The bonnet 13 is then arranged openably and closably between the closed position where the engine room 12 is closed and the opened position where the rear piece portion 13d is lifted upward by making the front end edge of the upper piece portion 13a a fulcrum to expose the engine room 12 to the outside.

Further, an engaging piece 13e, which is folded inward, is formed at the front end edge of the upper piece portion 13a and the left and right side piece portions 13b, 13c of the bonnet 13. Then, the engaging piece 13e is arranged in such a manner that when the bonnet 13 is turned to the closed position, the engaging piece 13e is positioned in front of the engagement receiving piece 11b, i.e. the rear groove side piece 11b of the recessed groove portion 11a on the pedestal case, in a longitudinally overlapped manner, and that the sealing member 11c contacts the inner surface of the upper piece portion 13a, so that the bonnet 13 is engaged with the pedestal case 11 and seals the engine room 12.

It is noted that the numeral 14 indicates locking means for locking the bonnet 13 to the rear frame 10, the locking means 14 being arranged in such a manner as to be automatically - locked when the bonnet 13 is turned to the closed position. The locking means 14 is released through a predetermined opening operation (e.g. unlocking operation) when opening the bonnet 13. Then, the locking means 14 is arranged in such a manner as to move the bonnet 13 slightly upward from the rear frame 10 by the urging force of an elastic mechanism when released. Because the arrangement is achieved using general-purpose locking means, a detailed description will be omitted.

In addition, a connection pipe body 15 is arranged inside the bonnet 13. The connection pipe body 15 is bent into a U shape along the front end edge of the upper piece portion 13a through the front end edge of the left and right side piece portions 13b, 13c. The end portions (lower end portions) 15a of the connection pipe body 15 are fixed, respectively, to the left and right side piece portions 13b, 13c of the bonnet. Further, a pair of left and right auxiliary pipe bodies 15b are extended backward, respectively, from the left and right ends of the upper part of the connection pipe body 15. The lower end portions of the auxiliary pipe bodies 15b, which are disposed along the upper piece portion 13a and the rear piece portion 13d close to the lower edge of the rear piece portion 13d, are fixed integrally to the lower end edge of the rear piece portion 13d. As such the connection pipe body 15 is strengthened to improve the integration of the connection pipe body 15 and the bonnet 13. Further, the upper part of the connection pipe body 15 is connected integrally with a sub-pipe body 15c which is disposed parallel to the connection pipe body 15, and on the left and right end portions of the parts thus disposed in parallel are, respectively, provided connection fitting plates 15d.

The numeral 16 indicates a radiator arranged in the engine room 12. The radiator 16 is fixed integrally to the rear frame 10 via a laterally extending fitting support body 17. Asymmetrically formed left and right brackets for opening and closing device 17a are fixed, respectively, to the left and right sides of the fitting support body 17. Between the left and right brackets for opening and closing device 17a (machine body) and the left and right fitting plates 15d on the bonnet 13 are, respectively, provided a pair of left and right opening and closing devices 18, 19 embodying the present invention.

It is noted that the left and right opening and closing devices 18, 19 are formed asymmetrically. Thus, described here will be the right opening and closing device 19 including a locking mechanism for locking the opened position of the bonnet 13 when opened. For the components of the left opening and closing device 18, these are to be designated with the same reference numerals as those for the right opening and closing device 19 in the figures and the overlapping description will be omitted.

A machine body side fixing plate (corresponding to the machine body side support body in the present invention) 20 that constitutes the right opening and closing device 19 has one folded piece 20a which is folded into an L shape and the other folded piece 20b extending upward from the folded piece 20a. The one folded piece 20a is threadably fixed to the right bracket for opening and closing device 17a in the rear frame (machine body) 10. The other folded piece 20b is arranged in such a manner that the plate surface thereof extends longitudinally, and through holes are opened in longitudinally different positions (on the base end side and the leading end side) of the other folded piece 20b, the through holes being incorporated with first and second support members 20c, 20d on the machine body side. It is noted that the first support member 20c is provided below the second support member 20d.

Meanwhile, the fitting plate 15d on the bonnet 13 is connected integrally with a bonnet side fixing plate (corresponding to the bonnet side support body in the present invention) 21 of the opening and closing device 19, the plate being arranged in such a manner as to be displaced integrally with the bonnet 13 when the bonnet 13 is opened or closed. The fixing plate 21 is folded into an L shape, one leg piece 21a thereof is threadably fixed to the fitting plate 15d on the connection pipe body 15. Further, the other folded piece 21b extending downward from the one folded piece 21a of the bonnet side fixing plate 21 is arranged in such a manner that the plate surface thereof extends longitudinally, and through holes are opened in longitudinally different positions (on the base end side and the leading end side) of the other folded piece 21b when the bonnet 13 is closed, the through holes being incorporated with first and second support members 21c, 21d on the bonnet 13 side. It is noted that the first support member 21c is provided below the second support member 21d.

Then, the machine body side fixing plate 20 and the bonnet side fixing plate 21 are connected via a first link 22, the ends of which are movably connected, respectively, with the first support members 20c, 21c on the respective fixing plates 20, 21, and a second link 23, the ends of which are movably connected, respectively, with the second support members 20d, 21d on the respective fixing plates 20, 21. Thus the opening and closing device 19 has a 4-point supported link structure composed of the first and second support members 20c, 20d, 21c, 21d. It is noted that the opening and closing device 19 is disposed in such a manner that the bonnet side fixing plate 21 and the machine body side fixing plate 20 are arranged vertically in approximately the same position when the bonnet 13 is closed, and that the bonnet side fixing plate 21 is positioned anterior to the machine body side fixing plate 20. It is further arranged that the first and second support members 20c, 20d on the machine body side are, respectively, positioned slightly below (lower than) the first and second support members 21c, 21d on the bonnet side, and therefore the first and second links 22, 23 are arranged in an inclined manner that the front end sides thereof are positioned above (higher than) the rear end sides.

The thus arranged opening and closing device 19 is adapted to open the bonnet 13, when the locking means 14 is released and when an opening application force is applied upward to the bonnet 13, in such a manner as to follow the upward movement by using the support members 20c, 20d on the machine body side of the first and second links 22, 23 as a fulcrum.

Further, the numeral 24 indicates a stopper mechanism for keeping the bonnet 13 in the opened position. The stopper mechanism 24, which is provided on the right opening and closing device 19 in the present embodiment, can be provided on either the left or right opening and closing device 18, 19. It will further be appreciated that the mechanism can be provided on both the devices.

The stopper mechanism 24 is provided in a position of the first link 22 facing (overlapping) the bonnet side fixing plate 21. The stopper mechanism 24 comprises a stopper pin 24a, the leading end thereof penetrating the first link 22 to be struck against the plate surface of the folded piece 21b of the bonnet side fixing plate; an elastic mechanism 24b for urging the stopper pin 24a pressingly toward the folded piece 21b; and a lock hole 21e opened in a position of the folded piece 21b facing the stopper pin 24a when the bonnet 13 is opened. It is then arranged that when the folded piece 21b and the first link 22 move relatively with the opening of the bonnet 13, the leading end of the stopper pin 24a slides along the plate surface of the folded piece 21b to be fitted into the lock hole 21e in the folded piece 21b as the bonnet 13 is turned into the opened position, which limits the movement of the first link 22 and thereby controls (locks) the bonnet 13 in the opened position.

It is noted that the stopper mechanism 24 is arranged in such a manner as to be released by pulling an operation rod 24c provided on the base end side of the stopper pin 24a, thereby to release the position control of the bonnet 13.

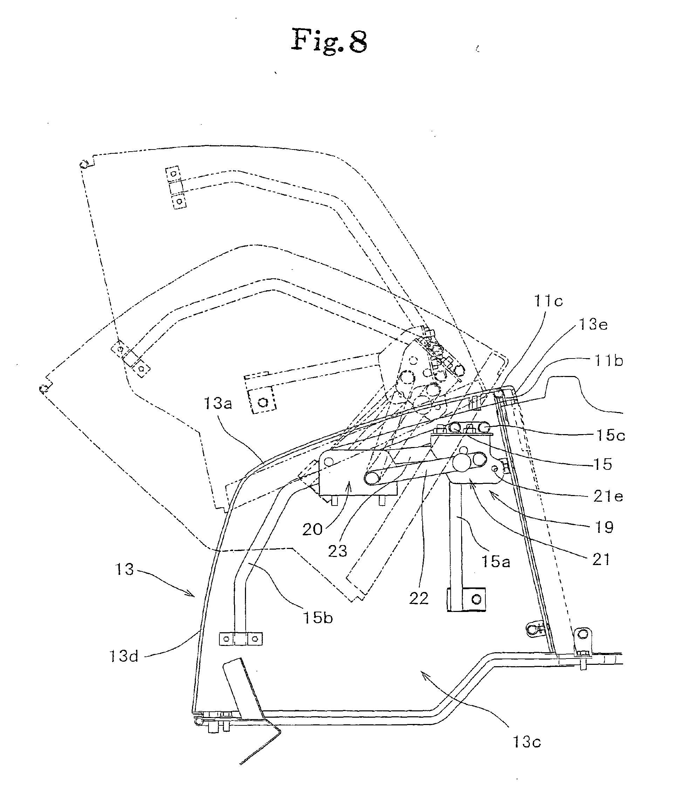

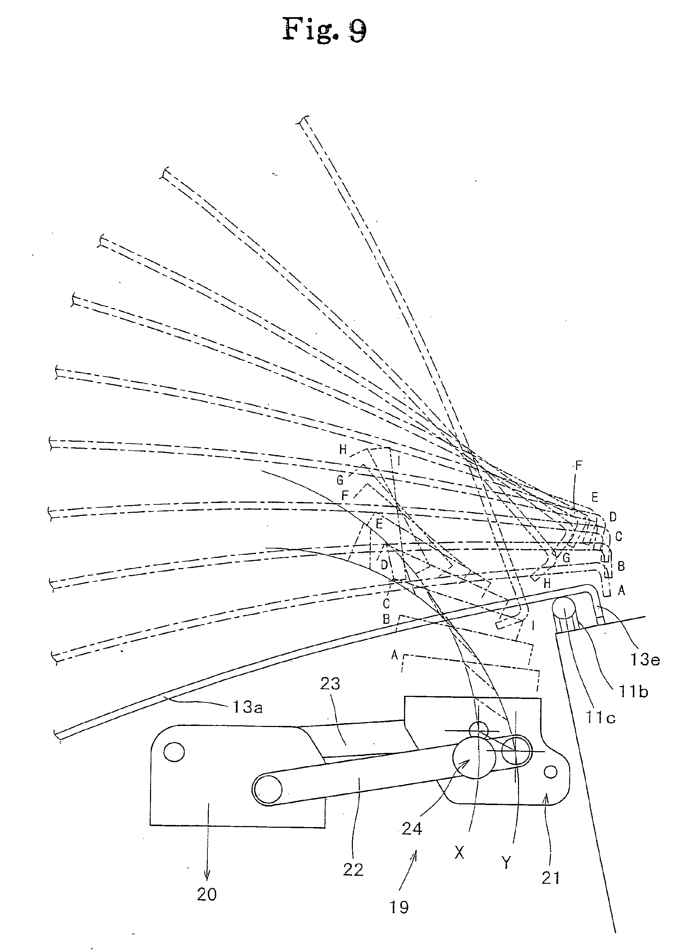

Next will be described the opening and closing operation of the bonnet 13 by the left and right opening and closing devices 18, 19 with reference to the illustrative views shown in Figs. 8 and 9.

As mentioned above, when the bonnet 13 is closed, the engaging piece 13e is positioned in front of the engagement receiving piece 11b of the pedestal case 11 in an overlapped manner, whereby the bonnet 13 is engaged with the pedestal case 11 and the engine room 12 is waterproofed effectively. In this closed position, the first and second links 22, 23 are arranged in an inclined manner such that the front end sides thereof are positioned above the rear end sides. When the locking means 14 is released, the front end sides of the first and second links 22, 23 start to move upward (i.e. the bonnet 13 moves upward) smoothly by means of an urging elastic mechanism provided in the locking means 14.

It is then arranged that in the case of opening the bonnet 13 by lifting the rear piece portion 13d of the bonnet (i.e. by performing an opening (upward movement) operation), after thus being slightly moved upward, the bonnet 13 provided with the lifting force, moves upward while receiving the movement control by the 4-point supported link mechanisms provided in the left and right opening and closing devices 18, 19.

In Fig. 9, the curve X indicates the movement locus of the front end portion of the first link 22, while the curve Y indicates the movement locus of the front end portion of the second link 23. There are shown nine positional relationships of steps A to I, during the bonnet opening of the bonnet side fixing plate 21 and the engaging piece 13e of the bonnet 13 due to the movement of the front end portions of the first and second links 22, 23 along the curves X, Y by the link operation of the opening and closing device 19. As shown in the figure, it is arranged that in the initial step in opening the bonnet 13, an opening operation force (upward movement force) is applied to the bonnet 13, whereby the opening and closing device 19 receiving the opening operation force moves the first and second links 22, 23 so that the entire bonnet side fixing plate 21 is moved approximately vertically upward in a substantially parallel manner. Thus, the bonnet 13, moved integrally with the bonnet side fixing plate 21, is separated upwardly in a substantially parallel manner(approximately in parallel) relative to the rear frame 9 while being kept in the substantially closed orientation. Therefore the engaging piece 13e of the bonnet is positioned above the engagement receiving piece 11b on the pedestal case 11 (indicated by the displacement from step A to step D shown in Fig.9).

It is arranged that as the opening operation is further continued from the foregoing state, the bonnet side fixing plate 21 is to be gradually raised up with the rear end portion moving upwardly with the front end side of the bonnet side fixing plate 21 acting as a fulcrum, and being displaced rearwardly (indicated by the displacement from step E to step H shown in Fig.9). Thus, the bonnet 13 moves integrally with the bonnet side fixing plate 21 and is turned to the opened position where the rear end is moved upward using the front end of the bonnet side fixing plate 21 as a fulcrum. The engaging piece 13e, on the front end side of the bonnet 13, is displaced over the engagement receiving piece 11b to be positioned to the rear of the engagement receiving piece 11b.

As the opening operation is further continued from the foregoing state where the engaging piece 13e is positioned to the rear of the engagement receiving piece 11b, the bonnet side fixing plate 21 is further raised up with the rear end portion upwardly using the front end of the bonnet side fixing plate 21 as a fulcrum, the entire fixing plate 21 is displaced downward (indicated by the displacement from step H to step I shown in Fig.9). Thus the bonnet 13 moves integrally with the bonnet side fixing plate 21 as it is turned to the opened position where the engine room 12 is exposed, and the portions behind the engaging piece 13e are displaced downward to allow the engaging piece 13e and the engagement receiving piece 11b to be arranged side by side in a vertically similar position.

With the arrangement above, the bonnet 13 is turned from the closed position, where the engaging piece 13e is positioned in front of the engagement receiving piece 11b on the pedestal case 11 in an overlapped manner so the bonnet 13 is engaged with the pedestal case 11, into the opened position where the engaging piece 13e rides over the engagement receiving piece 11b to be displaced backward. As a result, opening the bonnet 13 ensures a large opening. Further, because the bonnet 13 is moved downward as well as displaced backward when in the opened position, the operator standing behind the bonnet 13 can close the bonnet 13 easily.

In the thus arranged present embodiment, the bonnet 13 is opened via the left and right opening and closing devices 18, 19 disposed between the rear frame 10, that constitutes the engine room 12, and the bonnet 13 relative to the rear frame 10. The opening and closing devices 18, 19 have a link structure obtained by movably connecting four support members of the first and second support members 20c, 20d on the machine body side fixing plate 20 and the first and second support members 21c, 21d on the bonnet side fixing plate 21, respectively, via the first and second links 22, 23. The machine body side fixing plate 20 and the bonnet side fixing plate 21 are arranged to be in approximately the same relative vertical position when the bonnet 13 is closed. Accordingly, in the initial step of opening the bonnet 13, the bonnet 13 is separated substantially in parallel in the opening direction while being kept in the closed orientation. Thus even in the arrangement where the engaging piece 13e on the bonnet is adapted to be engaged with the engagement receiving piece 11b on the pedestal case, the engaging piece 13e can be retreated over the engagement receiving piece 11b, which allows the bonnet 13 to be opened without being disturbed by the engaging piece 13e.

Then, during the opening operation, the entire bonnet 13 is to be displaced backward by the link operation of the opening and closing devices 18, 19 while turned into the opened position to subsequently be displaced downward. Further the bonnet 13 is structured such a manner as to be engaged with the machine body and also waterproofed due to the engagement of the engaging piece 13e with the engagement receiving piece 11b when in the closed position, while a large opening portion can be ensured when the bonnet 13 is opened without being disturbed by the engagement receiving piece 11b.

In addition to the advantages above, when the bonnet 13 is opened, the engaging piece 13e rides over the engagement receiving piece 11b to be positioned below the receiving piece, and also displaced backward, whereby the operator standing behind the bonnet 13 to perform maintenance, etc., can reach the rear piece portion 13d of the bonnet easily when trying to close the bonnet 13, which advantageously improves the operationality of the closing operation.

### Industrial Applicability

As described heretofore, the opening and closing device for construction machinery according to the present invention is useful as, for example, an opening and closing device for a construction machine such as a hydraulic excavator or wheel loader, and is particularly suited for use in an opening and closing body such as a bonnet (engine hood).

## Claims

1. An opening and closing device in a construction machine, the opening and closing device openably and closably supporting an opening and closing body such as a bonnet between a closed position where a machine body is closed and an opened position where the leading end side of the opening and closing body is opened by using a base end side thereof as a fulcrum, the opening and closing device having a 4-point supported link structure comprising: a first support portion provided on the base end side of the opening and closing body and a second support portion provided on a leading end side thereof; a first support portion provided on a base end side of the machine body and a second support portion provided on a leading end side thereof; a first link connected movably between the first support portion on the opening and closing body side and the first support portion on the machine body side; and a second link connected movably between the second support portion on the opening and closing body side and the second support portion on the machine body side, wherein when the opening and closing body is closed, the corresponding support portions on the opening and closing body side and the machine body side are arranged in approximately the same positions in the opening and closing direction, while the support portions on the opening and closing body side are arranged closer toward the base end than the support portions on the machine body side, the opening and closing body being adapted to be moved approximately parallel to the opening direction thereof while being kept approximately in a closed orientation to subsequently be turned to the opened position.

2. The opening and closing device in a construction machine according to Claim 1, wherein the opening and closing body is adapted to be displaced toward the leading end side in the process of changing posture into the opened position.

3. The opening and closing device in a construction machine according to Claim 1 or 2, wherein the opening and closing body is adapted to be moved approximately parallel to the closing orientation thereof in the process of changing posture into the opened position in such a manner as to continue the displacement toward the opened position.

4. An opening and closing device in a construction machine, the opening and closing device openably and closably supporting a bonnet in a rear portion of a machine body between a closed position where the machine body is closed and an opened position where a rear end side is moved upward to be opened by using a front end side as a fulcrum, the opening and closing device having a 4-point supported link structure comprising: a bonnet side support body fixed integrally to the bonnet and having a first support portion provided on a front end side of the bonnet and a second support portion provided on a rear end side thereof; a machine body side support body fixed integrally to the machine body and having a first support portion provided on a front end side of the machine body and a second support portion provided on a rear end side thereof; a first link for movably connecting the first portions of the respective support bodies with each other; and a second link for movably connecting the second support portions with each other, wherein when the bonnet is closed, the bonnet side support body and the machine body side support body are arranged vertically in approximately the same position, and the bonnet side support body is arranged closer toward the front end than the machine body side support body is, and wherein an engaging piece formed in the front end portion of the bonnet is adapted to be engaged with an engagement receiving piece provided on the machine body in a longitudinally overlapped manner, the bonnet being adapted to be moved upward in approximately parallel while being kept approximately in a closed orientation to subsequently be opened after the engagement of the engaging piece with the engagement receiving piece is released.

5. The opening and closing device in a construction machine according to Claim 4, wherein the bonnet is adapted to be displaced toward the rear end in the process of changing posture into the opened position.

6. The opening and closing device in a construction machine according to Claim 4 or 5, wherein the bonnet is adapted to be moved downward in approximately parallel in the process of changing posture to the opened position in such a manner as to continue the displacement toward the opened position so that the front end of the bonnet rides over the engagement receiving piece to be positioned to the rear of the engagement receiving piece.
